# EUROPEAN PATENT SPECIFICATION

(11) **EP 0 555 050 B1**
(45) Date of publication and mention of the grant of the patent: **23.06.1999**
(21) Application number: 93300752.8
(22) Date of filing: 02.02.1993
(51) Int. Cl.: C08G 77/06, C08L 83/04

(54) **Silicone composition**
Silikonzusammensetzung
Composition à base de silicone

(30) Priority: 06.02.1992 US 832065
(43) Date of publication of application: 11.08.1993
(73) Proprietor: GENERAL ELECTRIC COMPANY, Schenectady, NY 12345 (US)
(72) Inventor: Traver, Frank John, Troy, New York 12180 (US); Ward, Brian John, Valley Falls, New York 12185 (US); Delker, Wayne Lee, Ballston Lake, New York 12019 (US); Thimineur, Raymond Joseph, Scotia, New York 12302 (US)
(74) Representative: Szary, Anne Catherine, Dr.

(56) References cited:
- WO-A-92/10161
- GB-A- 1 125 170
- US-A- 2 814 601
- US-A- 3 205 283

## Description

The present invention relates to personal care compositions containing liquid copolymers having R₃SiO_{0.5} units and SiO₂ units. More particularly the present invention relates to personal care compositions containing copolymers, commonly known as MQ resins, which are produced in liquid form by a hydrolysis reaction in an aliphatic hydrocarbon solvent having from 6 to 15 carbon atoms. Such Polymers have substantial utility in compositions in which solid counterparts prepared in aromatic solvents would not be suitable, especially in personal care products.

### BACKGROUND OF THE INVENTION

Silicone materials are well-known and are highly regarded for their high temperature capabilities, for their resistance to the elements and for their good low temperature properties. In addition, silicon compositions are good electrical insulating materials.

Resinous copolymers composed of R₃SiO_{0.5} units and SiO₂ units are well known in the art and are described in, for example, Dexter, United States Patent No. 2,736,721; Currie, United States Patent No. 2,814,601; Goodwin, United States Patent No. 2,857,356; and Modic, United States Patent No. 3,205,283. These copolymers are prepared by hydrolyzing a hydrolyzable triorganosilane, such as trimethylchlorosilane, with an alkyl orthosilicate, such as ethyl orthosilicate, or the Partial hydrolyzate of such alkyl orthosilicate. The hydrolysis is generally conducted in the presence of a small amount of water and in the presence of a suitable aromatic organic solvent, such as toluene or xylene.

These resin copolymers are in the form of a solid resin product and have been found to be useful in many commercial applications. They have been reported to be useful in the preparation of high strength organopolysiloxane compositions. See, Jeram et al., United States Patent No. 3,884,866. Their use in preparing room temperature vulcanizable (RTV) silicone rubbers has also been noted, such as in Smith, United States Patent No. 4,490,500. Saad, United States Patent No. 4,247,441 teaches preparing silicone molding compositions having excellent electrical properties. The use of the silicone resin copolymers in adhesive compositions is also well known in the art and is described in Horning, United States Patent No. 4,016,328; and Blizzard, United States Patent No. 4,255,316.

More recently, such copolymer resins are finding use in personal care products, i.e., in compositions for use on the skin, e.g., as antiperspirants, sunscreens, lotions, and the like.

However, the use of toluene and other aromatic hydrocarbons as the solvent in the synthesis of the silicone copolymers has increasingly become a concern because trace amounts of aromatic hydrocarbons such as toluene in the product resin requires special labelling, especially for personal care products, and in some instances there is a very low tolerance level for aromatic residues. It has therefore become necessary to find a replacement for toluene as a solvent in the hydrolyzation process to produce silicone copolymers.

Further, the prior art silicone copolymers are produced in a powdery form which requires the addition of solvents in order to affix the powdery silicone copolymers with silicone fluids. These solvents must then be removed. It would therefore represent an advance in the art if a silicone copolymer could be prepared having increased solubility in silicone fluids.

Still further, the prior art silicone copolymers do not dissolve readily in higher viscosity fluids. This detrimental characteristic further limits the use of these copolymers in personal care compositions such as skin lotions and sunscreens.

GB-A-1125170 discloses films obtained by condensing in the presence of stannous octoate a resinous siloxane copolymer composed of R₃SiO_{0.5} and SiO₂ units in a ratio of 0.77:1 to 1:1 and a silanol-terminated organopolysiloxane.

Noll "Chemistry and Technology of Silicones" 1968 Academic Press, p. 267-268 discloses liquid silicone compounds of formula Si(OSiR₃)₄. WO92/10161 which forms part of the state of the art according to Article 54(3) EPC discloses hair conditioning compositions comprising a silicone fluid and a silicone resin.

It has now been surprisingly found that by employing an aliphatic hydrocarbon of from 6 to 15 carbon atoms as the solvent for the hydrolyzation reaction, a novel silicone copolymer is produced in the liquid form which is substantially free from any aromatic hydrocarbons and which has improved solubility in silicone resin fluids and other solvents. Unexpectedly, as shown in the working examples of the instant specification, these novel silicone copolymers can be dissolved in high proportions in high molecular weight fluids. This excellent property provides a formulating flexibility to the end user, enabling the preparation of protective skin care products.

### SUMMARY OF THE INVENTION

According to the present invention there is provided a personal care composition comprising a solution of :
(a) from 20 to 60 weight percent of a liquid resinous copolymer of R₃SiO_{0.5} and SiO₂ units comprising from 0.5 to 2.0 R₃SiO_{0.5} units per SiO₂ unit, wherein R is a monovalent hydrocarbon radical selected from the group consisting of alkyl radicals of 1-8 carbon atoms, alkenyl radicals, cycloalkyl radicals, mononuclear aryl radicals and haloalkyl radicals, prepared by a process comprising hydrolyzing a hydrolyzable triorganosilane with an alkyl orthosilicate in the presence of water and a solvent consisting of an aliphatic hydrocarbon having from 6 to 15 carbon atoms and having an aromatic hydrocarbon content of less than 0.5 percent by weight based on the total weight of the solvent; and
(b) from 80 to 40 weight percent of an M-stopped or silanol end-stopped diorganopolysiloxane fluid.

Preferably the aliphatic hydrocarbon solvent comprises n-hexane, the alkyl orthosilicate comprises ethyl orthosilicate, the hydrolyzable triorganosilane comprises trimethylchlorosilane, and the liquid copolymer comprises from 0.5 to 1.0 R₃SiO_{0.5} units per SiO₂ units.

### DETAILED DESCRIPTION OF THE PRESENT INVENTION

The present invention comprises novel liquid silicone copolymers, also known as MQ resins, having R₃SiO_{0.5} units and RSiO₂ units. These copolymers are prepared by hydrolyzing a hydrolyzable triorganosilane with an alkyl orthosilicate or the partial hydrolyzate of such alkyl orthosilicate in the presence of water and an aliphatic hydrocarbon solvent having from 6 to 15 carbon atoms caving an aromatic hydrocarbon content of less than 0.5 percent by weight based on the total weight of the solvent. During the cohydrolysis of the triorganosilane and alkyl orthosilicate, most of the silicon bonded halogen and the silicon bonded alkoxy groups are replaced by silicon-bonded hydroxyl groups through which the two organosilicon materials condense to form siloxane linkages. The liquid copolymer is generally soluble in the organic aliphatic hydrocarbon solvent and insoluble in the water present in the hydrolysis reaction system, and the organic aliphatic hydrocarbon layer therefore contains the resinous copolymer. This organic solvent layer containing the liquid copolymer is separated from the aqueous layer and in some cases washed several times with water to provide the liquid copolymer in the organic aliphatic hydrocarbon solvent relatively free of either hydrochloric acid which results from the hydrolysis of the alkanol which results from the hydrolysis.

The aliphatic hydrocarbon solvent used in the hydrolysis reaction which forms the resinous copolymer can vary within wide limits. Typically they comprises aliphatic hydrocarbons having from 6 to 15 carbon atoms. Preferred are hexane, heptane, octane, nonane, decane, undecane, dodecane, tridecane, tetradecane, pentadecane, hexadecane, isomers thereof and mixtures of any of the foregoing. Most preferred is n-hexane. These materials are well known to those skilled in the art and are available commercially.

Also preferred for use in the present invention are the isoparaffinic aliphatic solvents. A particulary preferred commercial isoparaffinic aliphatic solvent is Isopar®E, Exxon Corporation, which is an isoparaffinic solvent of principally C₈ isomers. Other preferred commercial solvents are Isopar®C, G, H, K, L and M which are all isoparaffinic aliphatic solvents, the latter comprising a mixture of mainly C₁₃-C₁₆ isomers.

Important to the present invention is that the aliphatic hydrocarbon solvent have an aromatic hydrocarbon, such as benzene, toluene, styrene and xylene, content of less than 0.5 percent by weight based on the weight of the solvent. Preferably, the aromatic hydrocarbon content in the solvent is less than 0.2 percent by weight.

The R₃SiO_{0.5} units present in the resinous copolymer are generally those in which the R groups are methyl groups. However, also applicable are those units wherein the R groups are other monovalent hydrocarbon radicals such as, for example, alkyl radicals, e.g., ethyl, propyl, butyl and octyl radicals, aryl radicals, e.g., phenyl, naphthyl, xylyl and tolyl, aralkyl radicals, e.g., benzyl and phenylethy, radicals, alkenyl radicals, e.g., vinyl and allyl, radicals and cyclic hydrocarbon radicals, e.g., cyclohexyl, cycloheptyl and cyclohexenyl radicals, and various halogenated monovalent hydrocarbon radicals including chloromethyl, chloropropyl and dibromophenyl radicals. Preferably, where radicals other than methyl radicals are included in the R₃SiO_{0.5} units, the units also contain at least 50 percent trimethylsiloxane units.

The alkyl orthosilicates employed in the practice of the present invention are generally of the formula:

(R'O)₄Si

where R' is a lower alkyl radical or a lower hydroxy alkyl radical, such as methyl, ethyl, propyl, butyl, octyl and hydroxy ethyl radicals. Preferably, the alkyl orthosilicate employed is ethyl orthosilicate or the partial hydrolysis product thereof.

The methods of conducting the hydrolysis reaction is well known to those skilled in the art and is described in the patent literature. It is essential however for the purposes of the present invention that the solvent employed comprise an aliphatic hydrocarbon having an aromatic hydrocarbon content of less than 0.5 percent by weight based on the weight of the solvent.

The resulting copolymer is in the liquid form and has a ratio of R₃SiO_{0.5} units to SiO₂ units of from 0.5 to 2.0, more preferably from 0.6 to 1.0. The liquid copolymers have been found to exhibit many important properties over the solid copolymers of the prior art, including no trace amounts of aromatic hydrocarbon impurities, better solubility in silicone fluids and other solvents and an increased viscosity in silicone fluids.

As will be seen in the working examples which follow, different and unexpected advantages are obtained in back-to-back comparisons wherein the liquid copolymers of the present invention are formed into useful compositions and compared with compositions prepared with the solid copolymers of the prior art.

In one major end use aspect of the invention, the liquid copolymers are added to a silicone fluid such as an M-stopped diorganopolysiloxane fluid. However, it is also contemplated that silanol end-stopped diorganopolysiloxane fluids can be used in the practice of the present invention. Such compositions are broadly useful to produce, personal care compositions such as skin lotions and sunscreens. Preferred silanol end-stopped polymers are of the general formula: 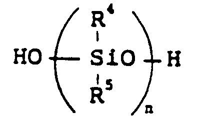 where R⁴ and R⁵ are the same or different and are monovalent hydrocarbon radicals, where n varies so that the polymer has a viscosity varying from 100 to 4,000 mPa.s (centipoise) at 25°C. Preferably, the polymer has a viscosity ranging from 100 to 2,000 mPa.s (centipoise) at 25°C. The R⁴ and R⁵ radicals can be any of the radicals selected from the group of alkyl radicals, such as methyl, ethyl and propyl; cycloalkyl radicals, such as cyclohexyl and cycloheptyl; alkenyl radicals such as vinyl and allyl; mononuclear aryl radicals such as phenyl, methylphenyl and ethylphenyl; and haloalkyl radicals such as fluoropropyl radicals including 3,3,3-trifluoropropyl. The silanol end-stopped polymer can be a polymer of substantially one viscosity or it may be a blend of two polymers of different viscosities to a arrive at a final silanol end-stopped polymer blend that has a viscosity varying from 100 to 4,000 mPa.s (centipoise) at 25°C.

Accordingly, the silanol polymer can be a blend of two or more silanol diorganopolysiloxane polymers wherein one of the silanol polymers has a viscosity in the range of 1,000 to 10,000 mPa.s (centipoise) at 25°C, and wherein the second silanol polymer has a viscosity in the range of 10 to 1,500 mPa.s (centipoise) at 25°C. Furthermore, there can be any other polymers present which have a viscosity in the range of 100 to 4,000 mPa.s (centipoise) at 25°C. It is only necessary that the final polymer blend have a viscosity ranging from 100 to 4,000 mPa.s (centipoise) at 25°C.

In certain embodiments of the present invention solutions of the compositions of the present invention and the silanol end-stopped polymers are prepared in proportions ranging from 20 to 60 weight percent of copolymer and from 80 to 40 weight percent of silanol end-stopped polymer. Preferred are solutions comprising from 40 to 60 weight percent of copolymer and from 60 to 40 weight percent of silanol end-stopped polymer.

The silanol polymer is produced either by a batch process or a continuous process. One method of producing a silanol polymer is to take the appropriate organopolysiloxanes and equilibrate them by reacting them in the presence of small amounts of potassium hydroxide catalyst at elevated temperatures, that is about 100°C and more preferably at temperatures above 150°C. At that temperature, the cyclopolysiloxane such as octamethyltetracyclo polysiloxane is equilibrated along the appropriate amount of chainstoppers, such as for instance water or a low molecular weight silanol terminated diorgano-polysiloxane, to form a silanol endstopped diorganopolysiloxane polymer. The most preferred chain stopper is water since it is cheaper and is quite effective especially in the continuous processes. The amount of water is determined by the viscosity of the diorganopolysiloxane polymer that is desired or the molecular weight of the end product diorganopolysiloxane product that is desired. Upon being equilibrated, the cyclo polysiloxane forms the silanol end-stopped diorganopolysiloxane polymer. At that point, the mixture is cooled, the catalyst is neutralized with phosphoric acid or a silyl phosphate and then the mixture is heated at elevated temperatures to remove unreacted cyclics.

It should be noted that in a continuous process for producing the silanol end-stopped diorganopoly-siloxane polymer or a blend of polymers, that the mixture is not cooled before it is neutralized, and indeed it does not have to be so cooled, since the polymer mixture has to be heated at temperatures above 50°C to remove the unreacted cyclics from the polymer mixture.

It should be further noted that the process for preparing the silanol end-stopped polymer is set forth among other places in Bessmer et al. United States Patent No. 3,888,815. However, there are other processes for preparing such silanol end-stopped polymers.

The liquid copolymers and the silanol end-stopped polymers are mixed together in any convenient fashion. It is found that the liquid copolymers and the silanol end-stopped polymers are completely miscible so that a uniform homogeneous solution of the liquid copolymers and the silanol end-stopped polymers is obtained upon mixing. Preferably, the mixture comprises from 1 to 10 parts by weight of the silanol end-stopped polymer per part by weight of liquid copolymer.

It is also contemplated that the liquid copolymers can be dissolved in organic solvents prior to admixing with the silanol end-stopped polymers. Where a solvent is used, it is important to remove the organic solvent from the solution. This can be effected by heating the solution under a reduced pressure as is well known to those skilled in the art. It is necessary to remove substantially all of the solvent from the solution.

While the exact chemical structure of this resulting solventless fluid material is not known with certainty, it is known that the solution contains a number of silicon-bonded hydroxyl groups or silanol groups. In general, the hydroxyl groups comprise from 0.1 to 3 percent by weight of the total solventless fluid. The presence of these silicon-bonded hydroxyl groups in the solventless fluid provide reactive sites through which the fluid can be cured after it is cast about an article to be encapsulated. These encapsulating fluids can be cured with either acidic or basic catalysts.

Of the acidic catalysts which can be employed to effect curing can be mentioned, for example, the metal salts of organic carboxylic acids and in particular the organic carboxylic acid salts of metals such as lead, tin, zinc, iron, cobalt, chromium and manganese. The organic carboxylic acid portion of these salts include any of the well known organic carboxylic acids which in their metal salt form, are conventionally used as paint driers. These acid derivatives include the acetates, octoates, butyrates and naphthanates. Among the preferred metal salt curing agents can be mentioned, for example, zinc octoate, lead acetate, lead octoate, lead naphthanate, and dibutyl tin dilaurate. Where these metal salt curing agents are employed, they are used in an amount equal to from 0.01 to 2 percent by weight of the metal from which the metal salt is derived.

Among the basic materials which can be employed as curing agents for the solventless encapsulating fluids of the present invention are quaternary ammonium and quaternary phosphonium compounds such as tetramethyl ammonium hydroxide, benzyl trimethyl ammonium hydroxide and tetrabutyl phosphonium hydroxide. Other preferred catalysts are those comprising a primary, secondary or tertiary amine and an epoxy-containing organic compound as are known to those skilled in the art. The primary, secondary or tertiary organic amines are those such as 1,3-di-methylbutyl amine, dimethyl soya amines, dibutyl benzyl amine, tetramethyl guanidine, M-methylmorpholine, tri-ethanol amine and dibutyl amine. The epoxy compounds employed in this catalyst system include the glycidyl ethers such as phenyl glycidyl ether, butyl glycidyl ether, the diglycidyl ether of bis-1,3-hydroxypropyl tetramethyldisiloxane, styrene oxide, cyclohexane oxide, as well as resinous materials containing epoxy groups such as the resinous reaction product of epichlorohydrin and p,p'-dihydroxyphenyldimethylmethane. Where this curing catalyst comprising the amine and epoxy compound is employed, both the amine and the epoxy compound are employed in an amount equal to from 0.1 to 5 percent by weight based on the weight of the solventless encapsulating fluid with the ratio of the amine compound to the epoxide compound being sufficient to provide from 0.2 to 5 moles of the amine per mole of the epoxy compound.

The choice of the particular catalyst which will be employed to cure the solventless encapsulating fluids of the present invention will depend on a number of factors. For example, while the metal salt curing agents provide very satisfactory cure of the encapsulating fluids, it is found that the acid residue from the curing catalyst has an adverse affect on certain metal parts, such as copper parts. Thus, when a printed circuit board having copper surface elements is encapsulated in the fluid of the present invention which has been catalyzed with a metal salt it is found that the acid residue tends to tarnish or discolor the copper elements, thereby adversely affecting both the appearance and the performance of such copper elements. On the other hand, when the material to be encapsulated is already enclosed in some other material, or is formed from a material such as stainless steel, the acid residue from the metal salt catalysts have no adverse affect on the curing system. The quaternary ammonium compound curing catalysts also present certain problems. These materials are so active that an extremely rapid cure of the solventless encapsulating system occurs resulting in a problem of bubble formation in the encapsulating coating. This can be reduced by lowering the concentration of the catalyst but again, this results often in an uneconomical rate of cure. On the other hand, the aforementioned amine/epoxy two component catalyst system has been found ideally suitable to the curing of the solventless encapsulating solution of the present invention with the rate of cure being suitable so that both thin sections and extremely thick sections, such as section 5.08 cm or more (two or more inches) thick, can be cured at a fairly rapid rate without the formation of bubbles in the resulting materials.

The compositions of the present invention can also be employed in preparing fluid/resin blends, used in personal care products, such as protective skin lotions and sunscreens, which are well known to those skilled in the art and are described in the literature.

### DESCRIPTION OF THE PREFERRED EMBODIMENTS

The following examples illustrate the present invention only. The examples are not intended to limit the scope of the present invention in any manner.

### EXAMPLES 1 and 2

A blend was prepared in a beaker from 395.8 g of triorganosilane and 204.7 g of hexane (Exxon Low Odor Paraffin Solvent).

553.7 g of the blend was then added to 700.3 g of ethyl silicate with agitation. To the mixture was added 450.3 g of city water using a dripping funnel. The boiling point of hexane is 67°C, so the water was added very slowly. During addition, the batch started refluxing so water addition was discontinued until refluxed stopped and temperature was about 50°C.

Water was added again very slowly, keeping temperature at 55°C until about 20 to 30 g were left and the botch began to become very viscous. After discontinuing stirring and water addition, separation of the batch occurred with no gelling. The remaining water was added and stirring was continued for 15 minutes. A trace of Chicago blue dye was added.

The batch was then transferred to a large separatory funnel and was allowed to separate for about 1 hour, at which time the lower layer was removed and the upper layer discarded.

The hydrolyzate was then stripped to remove solvent by gradually increasing heat to cause solvent to distill, for about 60 minutes at from 45 to 80°C until no solvent remained. The batch was then cooled and the resin was transferred to a glass jar. There resin was liquid with a slight cloudiness and yellow tint. The viscosity of the product resin was 68.5 mPa.s (cps) as measured on a Spindle No. 1 viscometer, speed 20 rpm and temperature of 23.0°C.

The same procedure is then followed, except that the hexane solvent is replaced with Isopar®E (Exxon Corporation) isoparaffinic solvent of principally C₈ isomers having a total aromatic content of 0.02% by weight. For comparative purposes, the procedure is followed using toluene as the solvent.

The three samples are then added to a diluent, polydimethylsiloxane, SF18-350 in Examples 1 and 2, and SF96-350 in comparative Example 1A*, in varying amounts for solubility testing. The results are set forth below in Table 1.

**TABLE 1**

| Example | 1A* | 1 | 2 |
|---|---|---|---|
| Solvent Viscosity^{a} | Toluene | Hexane | Isopar® E |
| 100% Resin | Solid | 56,000 | 1,284,000 |
| 60% Resin | 3,840,000 | 820 | 1,180 |
| 35% Resin | 1,500 | 650 | 550 |
| 20% Resin | 550 | 566 | 450 |
| % Silanol | 2 | 1.24 | 0.29 |
| % Alkoxy | -- | -- | 5.0 |

| | | | |
|---|---|---|---|
| * = Comparative Example | | | |
| ^{a} = mPa.s (centipoise), percent of resin in SF 350 diluent | | | |

From Table 1 above, it can readily be seen that the MQ resins manufactured in aliphatic hydrocarbons, hexane and Isopar® E, have vastly increased solubility in 350 weight silicone fluids over MQ resins manufactured in toluene.

### EXAMPLES 3-10

Three different MQ resins were dispersed in a polydimethyl siloxane fluid at varying concentration. The first resin, comparative examples 3A*, 3B* and 3C*, has a 0.67:1 M:Q ratio and was made in toluene; the second resin, examples 3-6, has a 0.67:1 M:Q ratio and was made in n-hexane; and the third resin, examples 7-10, has a 1:1 M:Q ratio and was made in n-hexane. The respective resins are tested for viscosity, appearance and water resistance. The results are set forth below in Table 2.

**TABLE 2**

| Example | 3A* | 3B* | 3C* | 3 | 4 | 5 | 6 | 7 | 8 | 9 | 10 |
|---|---|---|---|---|---|---|---|---|---|---|---|
| Solvent | T | T | T | H | H | H | H | H | H | H | H |
| % MQ^{a} | 60ⁱ | 35ⁱ | 20ⁱ | X^{j} | 60^{j} | 35^{j} | 20^{j} | X^{k} | 60^{k} | 35^{k} | 20^{k} |
| Viscosity mPa.s (cps) @ 25°C | 3.84^{b} | 1500 | 570 | 60,000 | 800 | 600 | 550 | 210 | 325 | 240 | 240 |
| Appearance | vsh | c | c | c | c | h | h | c | c | c | c |

| | | | | | | | | | | | |
|---|---|---|---|---|---|---|---|---|---|---|---|
| * = Comparative Example | | | | | | | | | | | |
| ^{a} = % MQ in SF-96 (350) polydimethylsiloxane fluid | | | | | | | | | | | |
| ^{b} = viscosity times 10⁶ | | | | | | | | | | | |
| T = Toluene | | | | | | | | | | | |
| H = n-Hexane | | | | | | | | | | | |
| X = 100% resin | | | | | | | | | | | |
| vsh = very slight haze | | | | | | | | | | | |
| c = clear | | | | | | | | | | | |
| h = hazy | | | | | | | | | | | |
| i = M:Q ratio of 0.67:1 | | | | | | | | | | | |
| j = M:Q ratio of 0.67:1 | | | | | | | | | | | |
| k = M:Q ratio of 1:1 | | | | | | | | | | | |

Samples 5 and 6 are quite hazy and are similar to silicones where a solubility problem exists. No viscosity of the resins prepared in toluene were run since the resin is a solid. It can be clearly seen from the data in Table 2 above, that much greater amounts of copolymer made in hexane can be dissolved in the high molecular weight fluid (SF-96(350)). Excellent viscosities are obtained using 60 percent of the copolymers of the present invention, whereas suitable viscosities could only be obtained with 35 percent of the prior art copolymers.

The ability of the higher percentages of the copolymers of the present invention to be dissolved in high molecular weight silicone fluids allows the preparation of personal care compositions having less tackiness and which enable protective skin care formulations to be prepared.

### EXAMPLES 11-13

### Water Resistance (Substantivity) of Resins.

Water resistance tests were run by employing a spray test method according to the following. A 15.24 cm (six inch) glass laboratory funnel was held above the test specimen on a laboratory ring stand by a laboratory ring support. A spray nozzle of 3.65 cm (1 7/16 inch) outside diameter having a convex face with a 3.18 cm (1 1/4 inch) radius was connected to the funnel bottom with piece of 0.95 cm (3/8 inch) rubber tubing. The nozzle was provided with 19 holes, each 0.889 mm (0.035 inch) in diameter, having one hole in the center, 6 evenly spaced holes on a 0.99 cm (25/64 inch) diameter circle, and 12 evenly spaced holes on a 2.14 cm (27/32 inch) diameter circle concentric with the outside circumference of the nozzle. The distance from the top of the funnel to the bottom of the nozzle was 19.05 cm (7.5 inches.) A Lexan® sheet 15.24 cm (6") wide was placed under the the nozzle at a distance of 15.24 cm (6 inches), and held at a 45° angle. Two samples were run side by side using 19 cm (3/4") wide masking tape to separate as follows.

Either 100cc or 250cc aliquots of water were used in testing the water resistance. The test was run until one sample failed by nearly all of the film washing off or until a total of 2000cc of water was used. Six drops of the test material was placed on the area for samples and spread in a thin film with a fingertip. The samples 10 and 10A* were first cut in SF1202 (pentamer) at 50% solution because of viscosity, and applied in the same manner. The SF1202, being volatile, was allowed to evaporate before testing began. The results are set forth in Table 3 below.

**TABLE 3**

| Example | 11A* | 11 | 12A* | 12 | 13A* | 13 |
|---|---|---|---|---|---|---|
| Copolymer | 35^{a} | 35^{b} | 35^{a} | 60^{c} | 60^{d} | 100^{e} |
| Solvent | T | H | T | H | T | H |
| Comments | L | M | E | E | E | E |

| | | | | | | |
|---|---|---|---|---|---|---|
| * = Comparative Example | | | | | | |
| ^{a} = Example 3B* copolymer | | | | | | |
| ^{b} = Example 5 copolymer | | | | | | |
| ^{c} = Example 4 copolymer | | | | | | |
| ^{d} = Example 3A* copolymer | | | | | | |
| ^{e} = Example 3 copolymer | | | | | | |
| T = Toluene solvent | | | | | | |
| H = Hexane solvent | | | | | | |
| L = 1/2 left after 6 cycles of wash | | | | | | |
| M = Failed after 4 cycles | | | | | | |
| E = Examples 12A* and 12; and examples 13A* and 13 exhibited equivalent performance, respectively. | | | | | | |

In all cases, higher resin levels of hexane produced resin were required to give comparable water resistance results.

### EXAMPLE 14

In order to determine the effect of common ingredients with the MQ resin products, a series of the resins was formulated into a sunscreen formulation which is expected to give an SPF value from 4 to 8. The formualtions and their water resistance results, as described above, are set forth in Table 4 below. All samples were dried for 2 hours before testing.

**TABLE 4**

| Example | 14A* | 14B* | 14C* | 14 |
|---|---|---|---|---|
| Composition, pbw | | | | |
| Part A | | | | |
| Stearic Acid | 2.5 | 2.5 | 2.5 | 2.5 |
| Cetyl Alcohol | 1.8 | 1.8 | 1.8 | 1.8 |
| Amphisol®^{a} | 2.5 | 2.5 | 2.5 | 2.5 |
| Copolymer | 3.0^{b} | 3.0^{c} | 6.0^{d} | 3.0^{e} |
| 2-Ethylhexyl p-methoxycinnamate | 7.5 | 7.5 | 7.5 | 7.5 |
| SF-1202^{d} | 10.0 | 10.0 | 7.0 | 10.0 |

| Part B | | | | |
|---|---|---|---|---|
| Glycerine | 3.0 | 3.0 | 3.0 | 3.0 |
| Keltrol T®^{e} | 0.3 | 0.3 | 0.3 | 0.3 |
| Water | 69.4 | 69.4 | 69.4 | 69.4 |

| Water Resistance | | | | |
|---|---|---|---|---|
| Rating | 0 | ++ | +++ | + |

| | | | | |
|---|---|---|---|---|
| * = Comparative Example | | | | |
| ^{a} = Givaudan Corp. | | | | |
| ^{b} = Example 13A* copolymer | | | | |
| ^{c} = 50% MQ resin of Example 13A* and 50% SF-1202 | | | | |
| ^{d} = Example 13 copolymer | | | | |
| ^{e} = Polydimethylsiloxane fluid (pentamer) General Electric Company | | | | |
| ^{f} = Kelco Div. Merk | | | | |

The rating system is as follows. (=) Much poorer than control. (-) Poorer than control. 0 Control, same as. (+) Slightly better than control. (++) Much better than control. (+++) Superior to control.

The above data shows that improved water resistance over the control formulation can be obtained with formulations comprising the compositions of the present invention.

Many variations of the present invention will suggest themselves to those skilled in this art in light of the above-detailed description. For example, instead of n-hexane, a wide variety of other aliphatic hydrocarbon solvents may be empolyed, including but not limited to isohexane, heptane, octane, nonane, decane, undecane, dodecane, tridecane, tetradecane, pentadecane, hexadecane and isomers thereof. Also, it is contemplated that nonlinear aliphatic hydrocarbon solvents can be employed in the practice of the present invention such as isoparaffinic solvents and other paraffin isomers. Further, the alkyl orthosilicate can be selected from methyl orthosilicate, propyl orthosilicate and n-butyl orthosilicate in addtion to ethyl orthosilicate. All such obvious modifications are within the full intended scope of the appended claims.

## Claims

1. A personal care composition comprising a solution of :
(a) from 20 to 60 weight percent of a liquid resinous copolymer of R₃SiO_{0.5} and SiO₂ units comprising from 0.5 to 2.0 R₃SiO_{0.5} units per SiO₂ unit, wherein R is a monovalent hydrocarbon radical selected from the group consisting of alkyl radicals of 1-8 carbon atoms, alkenyl radicals, cycloalkyl radicals, mononuclear aryl radicals and haloalkyl radicals, prepared by a process comprising hydrolyzing a hydrolyzable triorganosilane with an alkyl orthosilicate in the presence of water and a solvent consisting of an aliphatic hydrocarbon having from 6 to 15 carbon atoms and having an aromatic hydrocarbon content of less than 0.5 percent by weight based on the total weight of the solvent; and
(b) from 80 to 40 weight percent of an M-stopped or silanol end-stopped diorganopolysiloxane fluid.

2. A composition as defined in Claim 1 wherein R is a radical selected from the group consisting of ethyl, propyl, butyl, octyl, phenyl, naphthyl, xylyl, tolyl, benzyl, phenylethyl, vinyl, allyl, cyclohexyl, cycloheptyl, cyclohexenyl, chloromethyl, chloropropyl and dibromophenyl.

3. A composition as defined in Claim 1 or Claim 2 wherein said alkyl orthosilicate is selected from those of the formula (R'O)₄Si where R' is a radical selected from the group consisting of methyl, ethyl, butyl, octyl and hydroxyethyl.

4. A composition as defined in any preceding claim wherein said aliphatic hydrocarbon solvent is selected from the group consisting of hexane, heptane, octane, nonane, decane, undecane, dodecane, tridecane, tetradecane, pentadecane, hexadecane, isohexane, isoheptane, isooctane, isononane, isodecane, isoundecane, isododecane, isotridecane, isotetradecane, isopentadecane, isohexadecane, isomers thereof and mixtures of any of the foregoing.

5. A composition as defined in any preceding claim wherein said aliphatic hydrocarbon solvent comprises isoparaffinic solvents having from 6 to 15 carbon atoms.

6. A composition as defined in any preceding claim wherein said resinous copolymer comprises from 0.5 to 1.0 R₃SiO_{0.5} units per SiO₂ units.

## Patentansprüche

1. Körperpflege-Zusammensetzetzung, umfassend eine Lösung von
(a) 20 bis 60 Gew.-% eines flüssigen Harzcopolymers von R₃SiO_{1/2}- und SiO₂-Einheiten, umfassend von 0,5 bis 2,0 R₃SiO_{1/2}-Einheiten pro SiO₂-Einheit, worin R ein einwertiger Kohlenwasserstoffrest ist, ausgewählt aus der Gruppe bestehend aus Alkylresten mit 1 bis 8 Kohlensteffatomen, Alkenylresten, Cycloalkylresten, einkernigen Arylresten und Halogenalkylresten, hergestellt nach einem Verfahren, umfassend Hydrolysieren eines hydrolysierbaren Triorganosilans mit einem Alkylorthosilicat in Gegenwart von Wasser und einem Lösungsmittel, bestehend aus einem aliphatischen Kohlenwasserstoff mit 6 bis 15 Kohlenstoffatomen und mit einem Gehhlt an aromatischem Kohlenwasserstoff von weniger als 0,5 Gew.-%, bezogen auf das Gesamtgewicht des Lösungsmittels und
(b) von 80 bis 40 Gew.-% einer Diorganopolysiloxan-Flüssigkeit mit M-Endgruppen oder Silanol-Endgruppen.

2. Zusammensetzung nach Anspruch 1, worin R ein Rest ist, ausgewählt aus der Gruppe bestehend aus Ethyl, Propyl, Butyl, Octyl, Phenyl, Naphthyl, Xylyl, Tolyl, Benzyl, Phenylethyl, Vinyl, Allyl, Cyclohexyl, Cycloheptyl, Cyclohexenyl, Chlormethyl, Chlorpropyl und Dibromphenyl.

3. Zusammensetzung nach Anspruch 1 oder 2, worin das Alkylorthosilicat ausgewählt ist aus solchen der Formel (R'O)₄Si, worin R' ein Rest ist, ausgewählt aus der Gruppe bestehend aus Methyl, Ethyl, Butyl, Octyl und Hydroxyethyl.

4. Zusammensetzung nach einem vorhergehenden Anspruch, worin das aliphatische Kohlenwasserstoff-Lösungsmittel ausgewählt aus der Gruppe bestehend aus Hexan, Heptan, Octan, Nonan, Decan, Undecan, Dodecan, Tridecan, Tetradecan, Pentadecan, Hexadecan, Isohexan, Isoheptan, Isooctan, Isononan, Isodecan, Isoundecan, Isododecan, Isotridecan, Isotetradecan, Isopentadecan, Isohexadecan, Isomeren davon und Mischungen Irgendwelcher der vorgenannten.

5. Zusammensetzung nach einem vorhergehenden Anspruch, worin das aliphatische Kohlenwasserstoff-Lösungsmittel Isoparafin-Lösungsmittel mit 6 bis 15 Kohlenstoffatomen umfaßt.

6. Zusammensetzung nach einem vorhergehenden Anspruch, worin das Harzcopolymer von 0,5 bis 1,0 R₃SiO_{0.5}-Einheiten pro SiO₂-Einheit umfaßt.

## Revendications

1. Composition de soin personnel comprenant une solution contenant
(a) de 20 à 60 % en poids d'un copolymère résineux liquide de motifs R₃SiO_{0,5} et SiO₂, comprenant de 0,5 à 2,0 motifs R₃SiO_{0,5} par motif SiO₂, où R représente un radical hydrocarboné monovalent choisi dans le groupe formé par les radicaux alkyle comportant de 1 - 8 atomes de carbone, alcényle, cycloalkyle, aryle monocyclique et halogénoalkyle, préparé selon un procédé comprenant l'hydrolyse d'un triorganosilane hydrolysable et d'un orthosilicate d'alkyle en présence d'eau et d'un solvant constitué d'un hydrocarbure aliphatique comportant de 6 à 15 atomes de carbone et ayant une teneur en hydrocarbures aromatiques inférieure à 0,5 % en poids, rapporté au poids total du solvant ; et
(b) de 80 à 40 % en poids d'un diorganopolysiloxane liquide à motifs terminaux de type M ou silanol.

2. Composition selon la revendication 1, dans laquelle R représente un radical choisi dans le groupe formé par les résidus éthyle, propyle, butyle, octyle, phényle, naphtyle, xylyle, tolyle, benzyle, phényléthyle, vinyle, allyle, cyclohexyle, cycloheptyle, cyclohexényle, chlorométhyle, chloropropyle et dibromophényle.

3. Composition selon la revendication 1 ou 2, dans laquelle ledit orthosilicate d'alkyle est choisi parmi ceux de formule (R'O)₄Si où R' est un radical choisi dans le groupe formé par les résidus méthyle, éthyle, butyle, octyle et hydroxyéthyle.

4. Composition selon l'une quelconque des revendications précédentes dans laquelle ledit solvant hydrocarboné aliphatique est choisi dans le groupe formé par l'hexane, l'heptane, l'octane, le nonane, le décane, l'undécane, le dodécane, le tridécane, le tétradécane, le pentadécane, l'hexadécane, l'isohexane, l'isoheptane, l'iso-octane, l'isononane, l'isodécane, l'isoundécane, l'isododécane, l'isotridécane, l'isotétradécane, l'isopentadécane, l'isohexadécane, les isomères de celui-ci et des mélanges des composés précédents.

5. Composition selon l'une quelconque des revendications précédentes dans laquelle ledit solvant hydrocarboné aliphatique comprend des solvants isoparaffiniques comportant de 6 à 15 atomes de carbone.

6. Composition selon l'une quelconque des revendications précédentes dans laquelle ledit copolymère résineux comprend de 0,5 à 1,0 motif R₃SiO_{0,5} par motif SiO₂.
